# EUROPEAN PATENT APPLICATION

(11) **EP 4 383 526 A1**
(43) Date of publication of application: **12.06.2024**
(21) Application number: 21952665.4
(22) Date of filing: 03.08.2021
(51) Int. Cl.: H02K 3/24, H02K 3/34

(54) **PART FOR PROMOTING THE COOLING OF AN ELECTRICAL WINDING**

(71) Applicant: Asociacion Centro Tecnologico Ceit, 20018 San Sebastian (Gipuzkoa) (ES)
(72) Inventor: MARTINEZ-ITURRALDE MAIZA, Miguel, 20018 San Sebastián (Gipuzkoa) (ES); PAREDES PUENTE, Jesús, 20018 San Sebastián (Gipuzkoa) (ES); PRIETO ROCANDIO, Borja, 20018 San Sebastián (Gipuzkoa) (ES); SATRUSTEGUI DE LEGARRA, Marco, 20018 San Sebastián (Gipuzkoa) (ES); ELOSEGUI SIMON, Ibon, 20018 San Sebastián (Gipuzkoa) (ES); GARCIA GOICOECHEA, Javier, 20018 San Sebastián (Gipuzkoa) (ES); FLORES COMPAINS, Mikel Aitor, 20018 San Sebastián (Gipuzkoa) (ES)
(74) Representative: Evens, Paul Jonathan
(86) International application number: PCT/ES2021/070588
(87) International publication number: WO 2023/012381

(57) **Abstract**

The invention relates to a rotating electrical machine comprising a part made of electrically insulating material (1) housed within each slot (4) of a stator core (2), characterised in that said part (1) is configured to establish a separation between each of the conductors (5.1, 5.2) of the stator winding that pass through said slot (4), and to establish a channel (6) for the passage of a coolant fluid corresponding to each conductor (5.1, 5.2) allowing direct contact of the coolant fluid with each conductor (5) of the stator winding.

## Description

### Technical field

The present invention relates to rotating electrical machines, such as engines, generators and dynamos, in which there is a fixed part referred to as the stator and a mobile part referred to as the rotor that rotates inside or around the stator, and more specifically to said rotating electrical machines comprising a cooling system.

### State of the art

The operation of rotating electrical machines generates a quantity of thermal energy during their operation that must be evacuated for the correct operation of the elements that they consist of.

The critical elements of electrical machines include the windings, the temperature of which is limited by the maximum temperature that the electrical insulation of the conductors can withstand. For this reason, the power at which a machine can operate is ultimately limited by the capacity to extract heat from the losses produced in the different parts of the machine.

High-power density electrical machines require working with high current densities, thereby requiring the use of advanced cooling systems that allow the large amount of heat generated by the losses produced therein to be evacuated.

Regarding the losses produced in the electrical conductors, the heat transfer from these to the rest of the elements is mainly carried out through the electrical insulation thereof by thermal conduction. In order to evacuate heat, direct cooling mechanisms (where the coolant fluid, which is the cold source, is in direct contact with the conductors) can be used or indirect cooling mechanisms (through heat transfer between adjacent elements to the cold source), such as by means of natural convection, forced ventilation, cooling jackets, etc., can be used.

Direct cooling mechanisms are much more effective since they reduce the thermal resistance between the hot source (windings) and the cold source (coolant fluid), this being the subject matter of the invention. In these mechanisms, the thermal resistance between sources depends mainly on the electrical insulator, the convection coefficient and the contact area.

In some direct cooling systems, channels are used in the slot of the stator such that a channel is created for the passage of the coolant fluid that comes into contact with the stator winding.

An example of this type of machine that has a channel for the passage of a coolant fluid in the slot of the stator is European Patent document EP1300924. This document discloses an electrical machine wherein the slot of the stator comprises a resin plate that defines a cooling passage within the slot that produces direct contact of the coolant fluid with the conductors of the coil wound on the stator. This plate also isolates the coolant fluid of the stator from the rotor.

However, with this configuration the conductors remain in contact with each other, so it is necessary for all the conductors to have an insulating coating. This insulating coating reduces heat transfer between the conductors and consequently there are greater limitations in the sizing of the electrical machine. Furthermore, since the conductors are wound in a compact group, some conductors will have greater contact with the coolant fluid than others, and therefore the heat transfer will not be homogeneous.

In view of the described disadvantages or limitations presented by the currently existing solutions, a solution is necessary that allows better heat transfer in direct contact between coolant fluid and conductors of the stator winding, while providing a insulation between the stator and the rotor, as far as the circulation of coolant fluid is concerned.

### Object of the invention

In order to meet this objective and solve the technical problems discussed so far, in addition to providing additional advantages that can be derived later, the present invention proposes a rotating electrical machine with a cooling system comprising a part made of electrically insulating material housed within each slot of a stator core. Said part is configured to establish a separation between each of the conductors of the stator winding that pass through said slot. At the same time, said part is configured to establish a channel for the passage of a coolant fluid corresponding to each conductor of the stator winding, allowing direct contact of the coolant fluid with each conductor of the stator winding.

Thanks to this configuration, it is possible to position each conductor within the slot of the stator, creating a separation therebetween, which makes it possible to dispense with the insulating coating that must be applied in known solutions to the conductors to avoid short circuits between coils of the winding. In this way, with the possibility of dispensing with said insulating coating, the heat transmission between the coolant fluid and each conductor is improved, resulting in greater efficiency of the cooling system and therefore the operation of the electrical machine.

This separation between conductors creates cooling channels that allow direct contact of the fluid with each of the conductors, which produces more homogeneous cooling than in known solutions, being able to have greater control of the cooling parameters that can be varied with greater precision depending on the operation of the electrical machine, which allows the dimensions of the machine to be reduced for the same required power.

This configuration also allows the winding to be assembled externally to the machine, such that the conductors are arranged in the part made of electrically insulating material and subsequently said part is introduced axially into the slot of the stator with the winding. In this way, assembly is facilitated, reducing production times and avoiding incorrect installation that could lead to incorrect operation of the electrical machine.

Preferably, the part made of electrically insulating material transversely encloses the conductors of the slot of the stator, such that said part houses therein and completely surrounds said conductors, creating a perimeter wall that acts as electrical insulation against the stator.

Said perimeter wall of the separation part will preferably have an exterior geometry corresponding to the geometry of the slot of the stator. It can even cover the wedge of the slot, or even the neck of the slot. This configuration allows said part to fit into the slot, which facilitates assembly work.

To facilitate the separation between conductors, the part preferably comprises a plurality of inner ribs that serve as a seat and separation between conductors of the stator winding, facilitating the positioning of the conductors during assembly.

According to one design option, the part made of electrically insulating material transversely encloses each conductor of the slot, each conductor being positioned within a compartment in which a cooling channel is created. This arrangement is more appropriate when conductors with a circular cross section are used, the configuration of the part with inner ribs by contrast being more appropriate for conductors with a rectangular cross section, such as those used in hairpin windings in which there is a flat base surface that can be supported by the aforementioned ribs and thus reduce the material and weight of the part.

Furthermore, the configuration of the part in which each conductor is transversely enclosed allows for a radial insertion assembly with respect to the axis of the machine of the part with the conductors already installed therein.

According to a feature of the invention, the cooling system of the rotating electrical machine comprises an insulation ring that establishes a leak-tight reservoir between the casing and the stator, simultaneously preventing the passage of the coolant fluid to the rotor. In this way, the coolant medium of the rotor is separated from the coolant medium of the stator, being able to use a different type of coolant fluid for each one.

According to an alternative design, the plurality of parts that are housed in the slots of the stator are arranged joined together at one of the ends thereof to form a single part. Preferably, said attachment is established by means of a crown at one of the ends of the part, said crown being outside the stator core. In this way, it is possible to assemble the conductors in said part, and simultaneously insert it into all the slots of the stator along with the conductors, thus reducing manufacturing times.

According to another design alternative, the plurality of parts that are housed in the slots of the stator form a single part together with the insulation ring. Said parts are attached, in the part thereof corresponding to the neck of the slot, to said insulation ring, such that it is possible to assemble the conductors outside the machine and insert them at once into the stator, and also ensure leak-tightness between the rotor and the stator with a single part.

According to another design alternative, this single part connected to the insulation ring can be divided into two parts such that each part comprises an insulation ring section. Preferably, this ring section remains attached to the end of the electrically insulating part by which the plurality of parts are attached, the ring section being outside the body of the stator, that is, between the stator and a casing of the electrical machine that surrounds the rotor and stator. In this way, in the longitudinal extension of the stator, the electrically insulating part provides the separation between the coolant fluid of the rotor and the stator, and the stator and the casing or the coolant chamber, if applicable, it is the insulation ring that provides the tightness.

### Description of the figures

Figure 1 shows a schematic view of an exploded view of a rotating electrical machine in which the plurality of parts made of electrically insulating material capable of fitting into the stator core are shown, together with an independent insulation ring. The body of the rotor is not shown for greater clarity.
Figure 2 shows a cross-sectional view of the rotating electrical machine that is the subject matter of the invention.
Figure 3 shows a perspective view of an exemplary embodiment of the part made of electrically insulating material.
Figure 4 shows a detailed view of the part made of electrically insulating material assembled in the slot of the stator together with the conductors with, in this case, a rectangular cross section.
Figure 5 shows a perspective view of the plurality of parts made of electrically insulating material in the design alternative in which they are attached at one end by a crown, and where it can be seen how the conductors are assembled within said part.
Figure 6 shows a perspective view of the design alternative in which the plurality of parts are attached to the insulation ring.
Figure 7 shows a perspective view of the design alternative in which the plurality of attached parts is divided into two parts, each part comprising a ring section connected to the end of said plurality of parts.
Figure 8 shows a detailed cross-sectional view of the design alternative in which the part transversely encloses each conductor, in this case with a circular cross section.
Figure 9 is a perspective view of the stator, in which the parts made of electrically insulating material are being inserted together with the conductors according to the design alternative of Figure 8.

### Detailed description of the invention

In view of the aforementioned figures, and in accordance with the numbering adopted, a preferred exemplary embodiment of the invention can be seen, which comprises the parts and elements indicated and described in detail below.

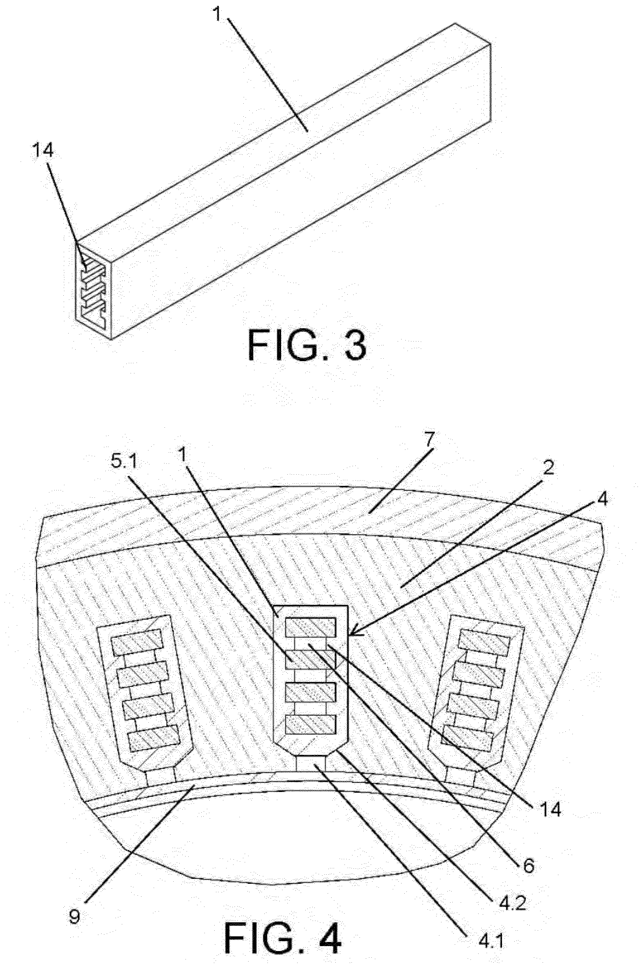

Figure 3 shows the part made of electrically insulating material (1) intended to fit into each of the slots (4) of the stator (2). This part (1) can be manufactured using additive manufacturing, plastic injection or another similar process. This part (1) totally or partially occupies the slot (4) (only the useful area of the slot (4), or the useful area of the slot (4) and wedge area (4.2), or useful area, wedge area (4.2) and neck area (4.1)).

As can be seen in Figures 3 and 4, the part (1) comprises inner ribs (14) that serve as a seat and separate the conductors (5.1). Said ribs project from the inner side walls of the part (1). In the embodiment of Figure 4, the conductors (5.1) used are the conductors (5.1) with a rectangular cross section typical of the hairpin winding, this type of conductor (5.1) being the ones for which greater advantages are obtained with the solution adopted in the present invention.

Said figure 4 shows how said ribs (14) establish a seat and separate each conductor (5.1) individually, forming a series of housings that facilitate the winding, and electrically isolating said conductors (5.1) which prevents them from having to have a coating. This separation also establishes a channel (6) for the passage of a coolant fluid between each of the conductors (5.1) that provides direct contact with the surface of the conductors (5.1) resulting in a more effective heat exchange.

This type of slot (4) requires the part (1) to be introduced axially into the stator (2), the part (1) preferably having an outer geometry corresponding to the geometry of the slot (4). This outer perimeter wall of the part (1) acts as electrical insulation of the conductors (5.1) against the stator (2).

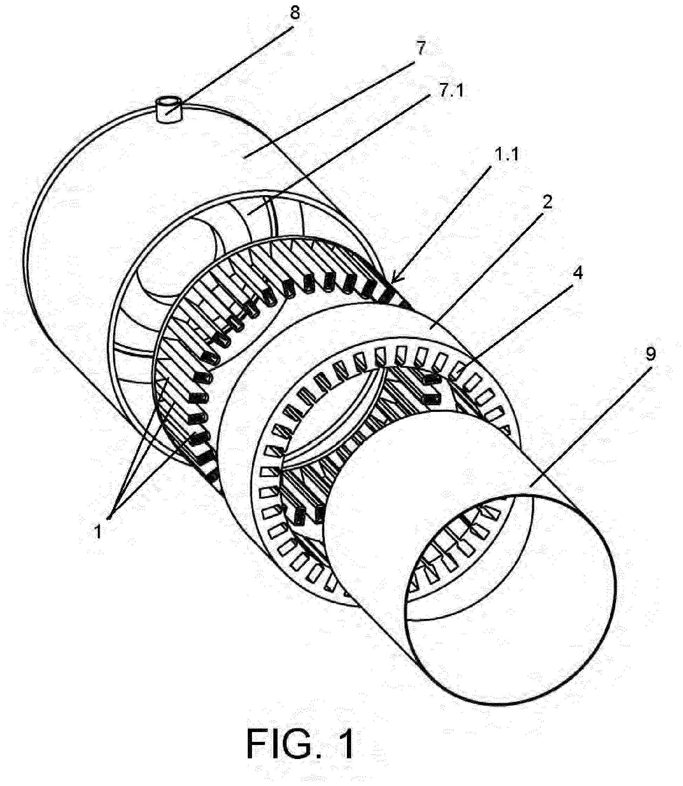

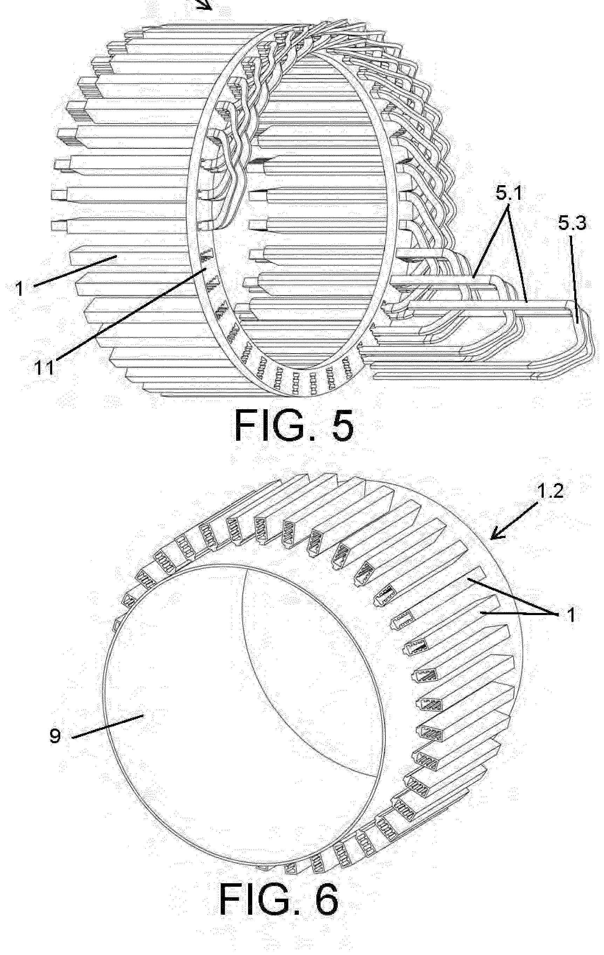

According to a practical embodiment of the invention, as can be seen in Figures 1 and 5, the plurality of parts (1) that are inserted into each of the slots of the stator (2), are preferably attached at one of the ends thereof by a crown (11), forming a single part (1.1). This configuration allows the winding to be assembled externally to the machine and then insert said part (1.1) with the conductors (5.1) into the stator (2).

Figure 5 shows how the assembly first proceeds with the pre-assembly of the winding, inserting each conductor (5.1) into each housing of the part (1). Once this pre-assembly has been completed, the part (1.1) with the conductors (5.1) is inserted axially into the slots (4) of the stator (2).

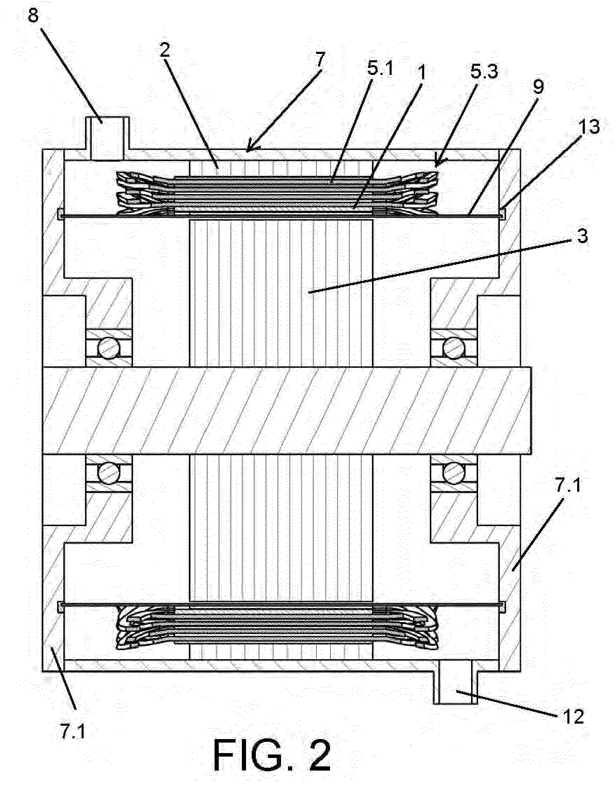

Preferably, in order to separate the coolant fluid of the stator (2) from the coolant fluid of the rotor (3), an insulation ring (9) is intended that establishes a leak-tight reservoir between a casing (7) and said ring (9) preventing the coolant fluid from passing to the rotor (3). Thus, as can be seen in Figure 2, once the part (1.1) with the conductors (5.1) is inserted into the stator (2), the insulation ring (9) is arranged, subsequently coupling the rotor (3). Next, a casing (7) is attached, which will preferably have a central enveloping part that is positioned outside the assembly formed by the stator (2) and the rotor (3), then assembling two side covers (7.1) (at least one) to completely close the electrical machine. The insulation ring (9) fits into said side covers (7.1) of the casing (7), which is preferably coupled together with O-rings (13) to ensure leak-tightness. This ring allows the coolant fluid of the stator (2) to be separated from the coolant fluid of the rotor (3), such that it is possible to use different coolant fluids to cool the stator (2) and the rotor (3).

Once the electric machine is formed, as can be seen in Figure 2, the cooling system establishes a first coolant fluid chamber between the ring (9), the casing (7) and one end of the stator (2), such that the coolant fluid (which must necessarily be insulating and, preferably, a good conductor, such as an oil) forms a flow that is inserted through at least one inlet mouth (8) entering the channels (6) from the first fluid chamber and passing to a second chamber in which there is at least one fluid outlet (12) for the outlet of the coolant fluid once the thermal exchange has taken place. This configuration of the cooling system of the machine allows direct contact of the fluid with each of the conductors (5.1), and thanks to the separation between conductors (5.1), it is not necessary for the conductors (5.1) to have an insulating coating, thus achieving a greater thermal exchange. It will only be necessary to apply said insulating coating to the heads of the winding (5.3).

According to another alternative embodiment, as can be seen in Figure 6, the plurality of parts (1) (in this case without the crown (11)) form a single part (1.2) in conjunction with the insulation ring (9). In this way, the conductors (5.1) can also be assembled externally and then said part (1.2), which comprises the plurality of parts (1) and the ring (9), fits into the stator (2). This configuration gives greater rigidity to the assembly, since the plurality of parts (1) form a unit with the ring (9). In this way, the part (1.2) correctly positions the ring (9) ensuring leak-tightness at its attachment to the casing (7).

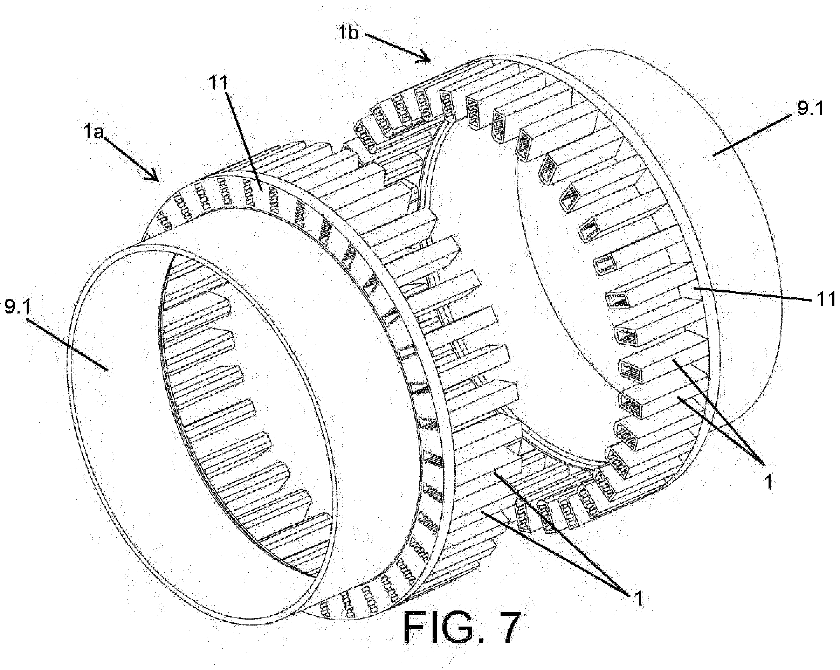

Figure 7 shows another alternative embodiment of the invention, which comprises two parts (1a, 1b), each part (1a, 1b) comprising the plurality of parts (1) attached by a crown (11) and with a section of insulation ring (9.1) connected to the end of the part that is outside the stator core (2), that is, the ring section (9.1) is arranged from the crown (11) to the cover of the casing (7). Each of the parts (1a, 1b) is inserted by fitting the parts (1) into the slots (4) of the stator, attaching both parts (1a, 1b) with attachment means such as clipping, adhesive, or pressfitting, resulting in a simple assembly that ensures leak-tightness between the rotor (3) and the stator (2). In this way, an additional ring (9) is not necessary and only the ring section (9.1) is necessary for the space defined between the end of the stator (2) and the casing (7), acting in the area of the stator (2) as a leak-tight element of the part (1) itself.

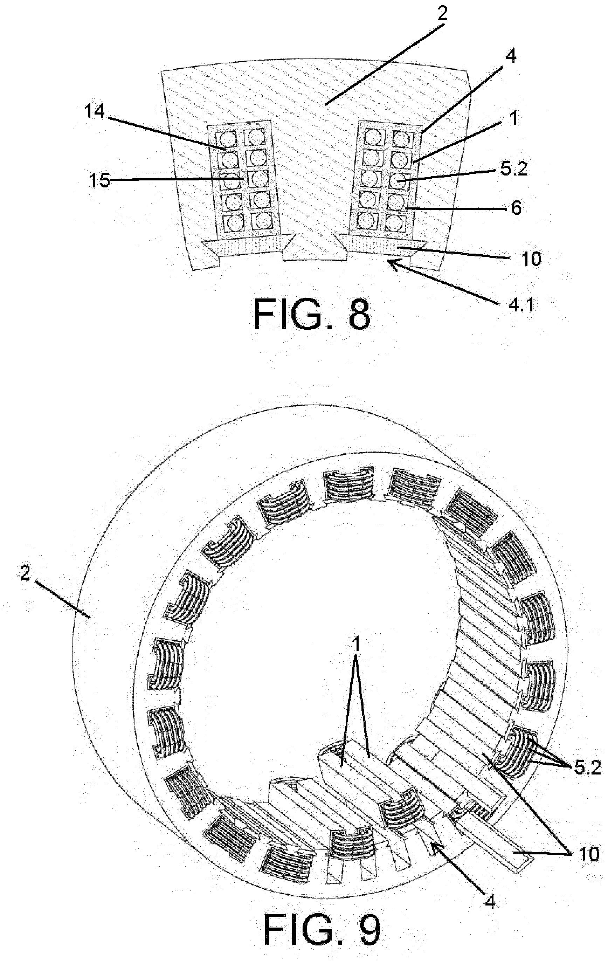

According to a last design alternative, when the conductors used in the stator winding are of the type of conductors with a circular cross section (5.2), it is intended that the part (1) has the configuration shown in Figures 8 and 9. The part (1) is configured to transversely enclose each conductor (5.2) of the slot (4) creating a housing for each conductor (5.2) as can be seen in Figure 8, in which said housing is defined between separation ribs (14) that project from an inner side wall of the part (1) to the opposite wall, and at least one central rib (15), creating an individual compartment for each conductor (5.2). Further comprising a channel (6) for the passage of a coolant fluid in the space not occupied by the conductors (5.2) in said compartment.

As can be seen in Figure 9, in this case the slots (4) are open, that is, without a wedge area (4.2), it is possible to radially insert the part (1) to support the conductors (5.2). Thus, in this case the pre-assembly is carried out externally in the form of a concentrated winding between two parts (1) that are subsequently inserted axially into the stator (2). The use of wedges (10) that physically close the slot (4) by fitting into a slot made for this purpose in the stator (2) itself is intended to retain said parts (1) inside the slot (4). Although a concentrated winding is shown in this figure, the solution is also valid with distributed windings.

## Claims

1. A rotating electrical machine comprising a part made of electrically insulating material (1) housed within each slot (4) of a stator core (2), **characterised in that** said part (1) is configured to establish a separation between each of the conductors (5.1, 5.2) of the stator winding that pass through said slot (4), and to establish a channel (6) for the passage of a coolant fluid corresponding to each conductor (5.1, 5.2) allowing direct contact of the coolant fluid with each conductor (5) of the stator winding.

2. The rotating electrical machine according to the preceding claim, **characterised in that** the part (1) transversely encloses the conductors (5.1, 5.2) of the slot (4) of the stator (2).

3. The rotating electrical machine according to claims 1 or 2, **characterised in that** the part (1) comprises an outer geometry corresponding to the slot (4) of the stator core (2).

4. The rotating electrical machine according to any one of the preceding claims, **characterised in that** the part (1) comprises a plurality of inner ribs (14) for a seat and separation of the conductors (5.1) of the stator winding.

5. The rotating electrical machine according to any one of the preceding claims, **characterised in that** the part (1) transversely encloses each conductor (5.1, 5.2) of the slot (4).

6. The rotating electrical machine according to any one of the preceding claims, **characterised in that** it comprises an insulation ring (9) that establishes a leak-tight reservoir between the casing (7) and said ring (9), which prevents the passage of the coolant fluid from the stator (2) to the rotor (3).

7. The rotating electrical machine according to any one of the preceding claims, **characterised in that** the conductors have a rectangular cross section (5.1).

8. The rotating electrical machine according to claims 5 or 6, **characterised in that** the conductors have a circular cross section (5.2).

9. The rotating electrical machine according to any one of the preceding claims, **characterised in that** the part (1) is insertable into the slot (4) radially to the axis of the machine.

10. The rotating electrical machine according to any one of the preceding claims, **characterised in that** it comprises a wedge (10) capable of fitting into the groove (4.1) of the slot (4) of the stator (2) for radial retention of the part (1) in said slot (4).

11. The rotating electrical machine according to any one of claims 1 to 7, **characterised in that** the part (1) is insertable into the slot (4) axially to the axis of the motor.

12. The rotating electrical machine according to the preceding claim, **characterised in that** the plurality of parts (1) that are housed in the slots (4) of the stator (2) are attached at one of the ends thereof to form a single part (1.1).

13. The rotating electrical machine according to claims 11 or 12, **characterised in that** the plurality of parts (1) that are housed in the slots (4) of the stator (2) form a single part (1.2) together with the insulation ring (9).

14. The rotating electrical machine according to the preceding claim, **characterised in that** the part (1) is divided into two parts (1a, 1b) and each part comprises an insulation ring section (9.1) attached to the end of the part (1.1) by which the plurality of parts are attached (1).
